# FASCICULE DE BREVET EUROPEEN

(11) **EP 4 445 018 B1**
(45) Date de publication et mention de la délivrance du brevet: **23.07.2025**
(21) Numéro de dépôt: 22814417.6
(22) Date de dépôt: 10.11.2022
(51) Int. Cl.: F03D 9/12, F03G 3/08

(54) **DISPOSITIF DE STOCKAGE D'ENERGIE A VOLANT D'INERTIE ET ENCEINTE DE CONFINEMENT EN BETON**
ENERGIESPEICHER MIT SCHWUNGRAD UND BETONGEHÄUSE
ENERGY STORAGE DEVICE WITH FLYWHEEL AND CONCRETE CONTAINMENT ENCLOSURE

(30) Priorité: 08.12.2021 FR 2113120
(43) Date de publication de la demande: 16.10.2024
(73) Titulaire: Energiestro, 90850 Essert (FR)
(72) Inventeur: GENNESSEAUX, André, 28200 Conie-Molitard (FR)
(74) Mandataire: Plasseraud IP
(86) Numéro de dépôt international: PCT/EP2022/081508
(87) Numéro de publication internationale: WO 2023/104425

(56) Documents cités:
- WO-A1-2013/138390
- DE-U1- 202015 007 985
- FR-A1- 2 946 097

## Description

### DOMAINE TECHNIQUE ET CONTEXTE

L'invention concerne le domaine des dispositifs de stockage d'énergie à volant d'inertie. Dans ces dispositifs, on stocke et restitue de l'énergie emmagasinée sous forme cinétique. Un rotor forme le volant d'inertie et un moteur-générateur injecte et/ou récupère de l'énergie cinétique, par conversion électrique.

Au vu des vitesses de rotation élevées, on prévoit d'utiliser une enceinte soit remplie de gaz léger, soit le plus souvent une enceinte où on établit un vide d'air.

Par ailleurs, pour des raisons de sécurité, dans le cas d'un éventuel incident d'intégrité sur le volant d'inertie qui pourrait conduire à voir des éléments se détacher, ces éléments doivent être contenus dans l'environnement immédiat du volant, il s'agit d'une fonction de confinement mécanique.

Dans l'art connu, on prévoit une enceinte étanche à l'air pour pouvoir faire le vide, cette enceinte est réalisée en métal. Pour le confinement mécanique, on prévoit que le volant d'inertie et son enceinte étanche soient installés dans une cavité de sol, par exemple un puits peu profond. Généralement on réalise une maçonnerie pour accueillir et loger le volant d'inertie et son enceinte étanche, ce qui est en pratique dispendieux.

Pour résister à la différence de pression liée à la mise au vide partiel ou total, l'enceinte étanche métallique doit présenter une épaisseur de paroi suffisante pour ne pas flamber, ce qui rend cette solution couteuse. Un exemple en accord avec l'état de l'art antérieur est décrit dans le document FR2946097.

Il demeure ainsi un besoin de proposer une solution globale plus économique.

### EXPOSÉ DE L'INVENTION

Suivant un premier aspect, il est proposé un dispositif de stockage d'énergie à base de volant d'inertie comprenant :
- une enceinte de confinement (2), définissant un espace intérieur dans lequel une dépression peut être créée,
- un volant d'inertie (1) contenu dans l'enceinte de confinement et monté à rotation par rapport à l'enceinte de confinement, le volant d'inertie comprenant un arbre métallique (12) et un corps à moment d'inertie, de préférence en béton,
- un palier supérieur (3) faisant office au moins de joint d'articulation à rotation entre une portée supérieure de l'enceinte et une portion supérieure de l'arbre,
- un palier inférieur (4) faisant office au moins de joint d'articulation à rotation entre une portée inférieure de l'enceinte et une portion inférieure de l'arbre, tel que l'enceinte de confinement est réalisée en béton, et tel que le palier supérieur fournit une fonction de support élastique pour supporter élastiquement une zone d'extrémité supérieure (12A) de l'arbre métallique par rapport la portée supérieure de l'enceinte, et tel que le palier inférieur fournit une fonction de support élastique pour supporter élastiquement une zone d'extrémité inférieure (12B) de l'arbre métallique par rapport la portée inférieure de l'enceinte.

Moyennant quoi, l'enceinte de confinement réalise à la fois la fonction d'enceinte de confinement et les paliers réalisent une fonction de support élastique. L'enceinte de confinement en béton peut être installée dans un trou creusé dans le sol avec peu de travaux préparatoires. Ainsi, la solution complète s'avère très performante en ratio prestations/coût.

La fonction de support élastique permet d'éviter de transmettre de potentielles petites vibrations du volant d'inertie vers l'enceinte et vers le sol. On diminue ainsi les risque de bruyance du système.

En outre, en cas d'une éventuelle défaillance du volant d'inertie, la fonction de confinement évite que des éléments du volant ne soient projetés à distance.

Les fonctions d'augmentation de vitesse (stockage d'énergie cinétique de rotation) et de restitution (prélèvement d'énergie et diminution de vitesse) sont assurées de manière classique, au moyen d'un moteur-générateur qui peut être intégré à l'espace intérieur ou non.

Sous le vocable « *dispositif de stockage d'énergie »,* il faut bien entendu comprendre un « dispositif de stockage et de restitution d'énergie ».

Il faut noter que la fonction support élastique fournie par les paliers respectivement supérieur et inférieur peut travailler dans le sens axial aussi bien que dans le sens radial.

Dans divers modes de réalisation de l'invention, on peut éventuellement avoir recours en outre à l'une et/ou à l'autre des dispositions suivantes, prises isolément ou en combinaison.

Selon une option, le palier supérieur (3) fournit une fonction d'étanchéité à l'air. Moyennant quoi, l'enceinte de confinement réalise à la fois la fonction d'enceinte étanche et la fonction de confinement mécanique. Ainsi, contrairement aux dispositifs connus antérieurement, il n'y a pas une enceinte d'étanchéité et un confinement mécanique distincts, mais une seule enceinte de confinement assurant les deux fonctions.

Selon une option, la fonction de support élastique du palier supérieur peut comprendre en outre une fonction d'amortissement et la fonction de support élastique du palier inférieur peut comprendre en outre une fonction d'amortissement.

Grâce à quoi, les vibrations qui peuvent être générées par la rotation du volant, à toutes les fréquences, et en particulier aux fréquences des modes propres, peuvent être amorties, l'amplitude diminuant progressivement du fait de l'absorption d'énergie par un élément amortissant dans lequel des frottements absorbent de l'énergie.

Selon une option, l'enceinte de confinement peut comprendre d'une part une cuve cylindrique (20), et d'autre part un couvercle (22) percé d'un orifice axial. Ainsi en préparant deux pièces en béton de forme relativement conventionnelle, on obtient les deux éléments essentiels formant l'enceinte de confinement. Pour l'assemblage, le couvercle ferme la cuve par le dessus.

Selon une option, la cuve cylindrique peut être obtenue par moulage à l'envers. Moyennant quoi la bordure circulaire sur laquelle va accoster le couvercle présente une géométrie bien maîtrisée.

Selon une option, l'enceinte de confinement peut être revêtue, au moins du côté intérieur, d'un revêtement étanche à l'air, ledit revêtement étant par exemple une résine chargée de flocons de verre. Ce revêtement permet de réaliser la fonction étanchéité à l'air nécessaire pour la mise au vide partiel de l'espace intérieur de l'enceinte de confinement.

Selon une option, on peut revêtir à la fois le côté intérieur et le côté extérieur notamment de la cuve cylindrique, et optionnellement le couvercle côté extérieur. Moyennant quoi, lorsque la cuve cylindrique est enterrée, le revêtement la protège des attaques chimiques, basiques ou acides des matériaux de remblai et autres ruissellements potentiels.

Selon une option, on utilise le même composé pour revêtir le côté intérieur et le côté extérieur de l'enceinte de confinement. Ceci conduit à une optimisation du coût de revient.

Selon une option, le palier supérieur fait office de joint **rotule.** Ainsi, on peut compenser une géométrie pouvant présenter une petite imperfection d'alignement, notamment au niveau de l'orifice axial pratiqué dans le couvercle.

Selon une option, le palier inférieur fait office de joint rotule. Ainsi, on peut compenser une géométrie pouvant présenter une petite imperfection d'alignement.

Selon une option, le palier supérieur peut comprendre un joint (5) élastomère ou caoutchouc portant sur la portée supérieure de l'enceinte, en particulier sur l'orifice axial du couvercle. En pratique le joint élastomère ou caoutchouc est interposé entre une bague extérieure du roulement et la portée supérieure de l'enceinte. Grâce à quoi le palier peut encaisser des vibrations induites par la rotation du volant d'inertie. Le joint élastomère ou caoutchouc fournit la fonction de support élastique amorti mentionnée plus haut.

Selon une option, le palier inférieur comprend un anneau en fil métallique tricoté (6) interposé entre la zone d'extrémité inférieure (12B) de l'arbre métallique et la portée inférieure de l'enceinte. Grâce à quoi cet anneau en fil métallique procure la fonction support élastique amorti et de plus cet anneau en fil métallique crée un pont thermique qui permet d'évacuer des calories depuis l'arbre vers la portée inférieure de l'enceinte par conduction thermique. On peut ainsi éviter les points chauds alors que l'évacuation des calories par convection est impossible en raison du vide d'air.

Selon une option, la cuve cylindrique (20) peut être dépourvue d'armature de renfort, la cuve cylindrique (20) peut être formée essentiellement par du béton fibré. Ainsi, le prix de revient de fabrication de la cuve cylindrique est particulièrement avantageux.

Selon une option, il peut être prévu une fonction de sustentation magnétique, de préférence passive. Moyennant quoi, le poids du volant d'inertie peut être compensé et la charge sur les éléments de roulement (roulement à billes ou à rouleaux) peut être substantiellement diminuée.

Selon une option, le dispositif peut comprendre en outre un moteur-générateur pour injecter et/ou récupérer de l'énergie cinétique, le moteur-générateur étant agencé sur l'arbre, dans l'espace intérieur de l'enceinte.

Selon une option, ledit moteur-générateur peut être refroidi par un circuit de liquide.

Selon une option, le corps à moment d'inertie du volant contient essentiellement du béton. Ainsi, le prix de revient de fabrication du volant d'inertie est particulièrement avantageux. On note qu'il peut être prévu une armature périphérique permettant de créer une précontrainte de compression dans le béton du volant d'inertie.

De préférence le corps à moment d'inertie en béton est précontraint par une enveloppe enroulée de fibres. Le béton travaille ainsi toujours en compression.

Selon une option, il peut être prévu un manchon et/ou un disque de support interposé entre les roulements de tête et le joint élastique reposant sur la portée du couvercle en béton.

Par ailleurs, la présente invention vise également une installation de stockage et restitution d'énergie comprenant un dispositif tel que décrit précédemment, dans lequel ledit dispositif est installé essentiellement dans une cavité de sol.

Selon une option, il peut être prévu une chape (99) en béton autolissant au fond de la cavité de sol. Ceci forme un socle sur lequel on vient poser la cuve cylindrique. On procède au remblai de la zone extérieure à la cuve cylindrique.

### DESCRIPTIF DES FIGURES

D'autres caractéristiques, détails et avantages de l'invention apparaîtront à la lecture de la description détaillée ci-après, et à l'analyse des dessins annexés.
La figure 1 représente en vue de demi-coupe un dispositif de stockage d'énergie selon l'art antérieur.
La figure 2 représente en vue de demi-coupe un dispositif de stockage d'énergie selon un mode de réalisation de la présente invention.
La figure 3 représente en vue de demi-coupe un exemple de réalisation du palier supérieur.
La figure 4 représente en vue de demi-coupe un exemple de réalisation du palier inférieur.
La figure 5 illustre des étapes de la mise en place d'un système de stockage d'énergie selon un mode de réalisation d'installation.
La figure 6 illustre une étape de moulage de la cuve cylindrique.
La figure 7 représente schématiquement une vue en plan du dispositif de stockage d'énergie.

### DESCRIPTION DE MODES DE RÉALISATION

Sur les différentes figures, les mêmes références désignent des éléments identiques ou similaires. Pour des raisons de clarté de l'exposé, certains éléments ne sont pas nécessairement représentés à l'échelle.

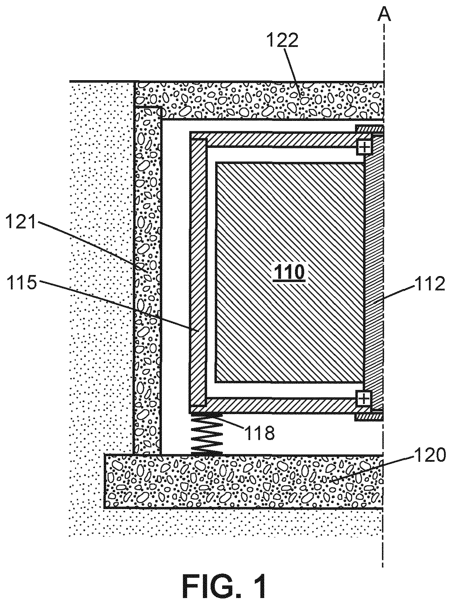

La figure 1 illustre un dispositif de stockage d'énergie à base de volant d'inertie selon une solution conventionnelle. Un volant **110** est monté sur des roulements au moyen d'un arbre tournant 112. Le volant est logé dans une enceinte étanche **115** réalisée en métal. Le tout est contenu dans une enceinte de confinement **120, 121, 122,** habituellement réalisée en béton. Il est prévu une suspension **118** pour filtrer de possibles vibrations régnant dans le volant d'inertie afin qu'elles ne soient pas transmises vers le sol. On fait habituellement le vide à l'intérieur de l'enceinte étanche **115** métallique.

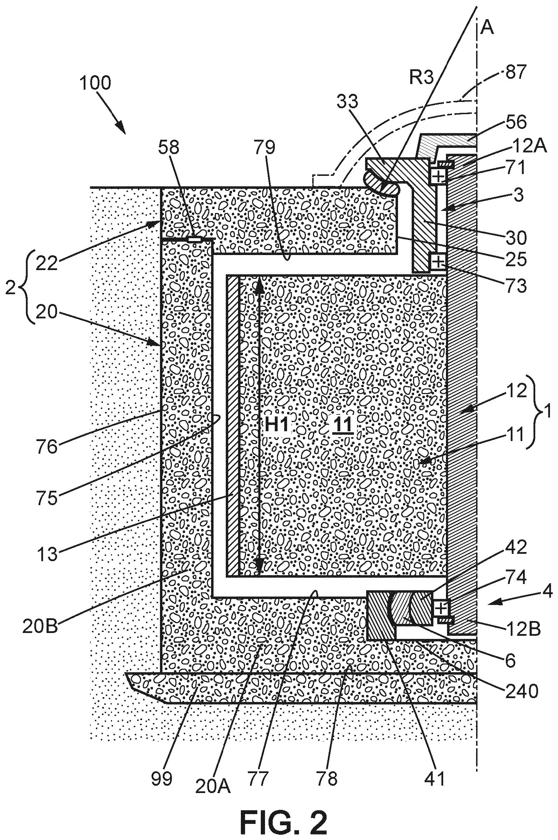

Sur la figure 2 et suivantes, on décrit maintenant un exemple de réalisation selon la présente invention. Il est proposé un dispositif de stockage d'énergie **100** à base de volant d'inertie **1.** Le volant d'inertie **1** comprend un arbre métallique **12** et un corps à moment d'inertie **11.**

Selon l'exemple illustré, le corps à moment d'inertie **11** est réalisé essentiellement en béton. Le corps en béton est contraint vers l'intérieur radialement par une enveloppe **13** cylindrique. L'enveloppe cylindrique 13 de précontrainte est formée comme un enroulement de fibres enroulées sous tension autour du cylindre en béton. Le béton travaille ainsi toujours en compression, y compris jusqu'à la vitesse de rotation maximum de service du volant.

L'arbre du volant repéré **12** présente une zone d'extrémité supérieure **12A** et une zone d'extrémité inférieure **12B.** L'arbre est généralement de révolution autour de l'axe **A.** Les zones d'extrémité de l'arbre peuvent présenter des portées et des étagements ainsi que des rainures circonférentielles.

Le volant d'inertie est monté sur des paliers via des roulements. Plus précisément, il est prévu un roulement de pied **74** au niveau du palier inférieur **4** et deux roulements de tête **71,73** au niveau du palier supérieur **3.**

La structure et les fonctions de chaque palier seront vues plus en détail plus loin.

### Enceinte en béton

Avantageusement, le dispositif de stockage d'énergie comprend une enceinte de confinement **2,** définissant un espace intérieur **EZ** dans lequel on peut créer une dépression comme il sera vu plus loin.

Plus précisément, l'enceinte de confinement **2** comprend un fond **20A** en forme de disque, une paroi périphérique cylindrique d'axe vertical **20B** et un couvercle **22** en forme de disque avec un orifice central, lequel couvercle est généralement une forme de disque de même diamètre que le fond ; selon l'exemple de réalisation représenté, le fond **20A** et la paroi cylindrique périphérique **20B** sont réalisées en une seule pièce en forme de cuve cylindrique **20** moulée en béton.

La paroi cylindrique périphérique **20B** est continue et ne contient pas d'orifice traversant. Le fond 20A est continu et ne contient pas d'orifice traversant, mais contient une zone en creux centrale **240** pour recevoir le palier inférieur.

L'épaisseur **e20** de la paroi cylindrique périphérique est typiquement comprise entre 3 cm et 15 cm. L'épaisseur du fond et du couvercle est typiquement comprise entre 15 cm et 40 cm.

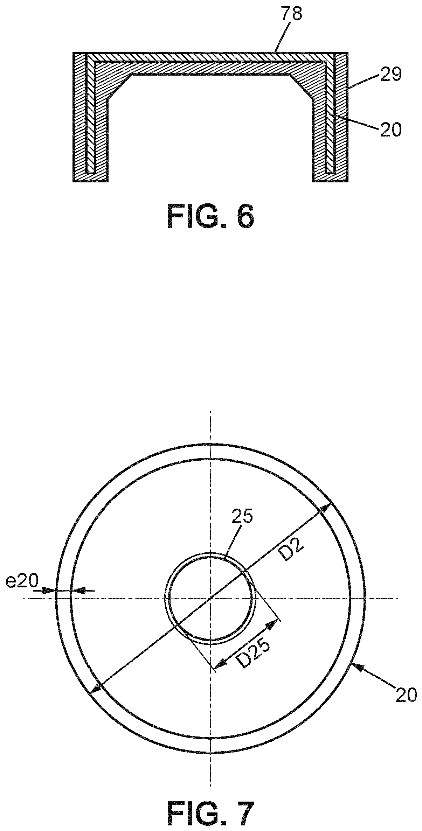

Pour des raisons d'optimisation de fabrication, la cuve cylindrique **20** est obtenue par moulage à l'envers. En pratique, comme illustré en figure 6, on dispose un moule **29** délimitant une cavité correspondant à la cuve cylindrique à obtenir. La partie inférieure forme la géométrie de la bordure de la cuve qui sera après installation orientée vers le haut et sur laquelle viendront le joint et le couvercle. À l'inverse, le fond externe de la cuve **78** qui se trouve en partie supérieure dans la configuration de moulage peut être raclée sommairement après vibrage. Le moulage de la cuve peut faire appel à l'utilisation d'un noyau mobile de moule.

Le couvercle **22** est également réalisé par moulage en béton.

Afin de contribuer à la mise en dépression, voire au vide, de l'espace intérieur **EZ** de l'enceinte de confinement, les parois intérieures **75** de la cuve cylindrique sont revêtues d'un revêtement étanche à l'air. Par exemple on peut choisir une résine chargée de flocons de verre comme revêtement étanche à l'air. Il n'est pas non plus exclu d'utiliser d'autre type de résine aux caractéristiques adéquates pour l'étanchéité à l'air. La paroi de fond **77,** la face interne **75** de la paroi cylindrique et le dessous du couvercle **79** seront ainsi revêtus d'une couche continue de revêtement étanche à l'air.

Selon une option, il est prévu un joint d'étanchéité annulaire repéré **58** en figure 2, qui permet d'assurer une étanchéité à l'air entre la cuve **20** et le couvercle **22.**

Une fois le couvercle assemblé et avec les surfaces intérieures enduites, il faudra traiter ensuite en outre l'étanchéité de la zone du palier supérieur pour obtenir un espace intérieur isolé pouvant être tirée au vide, i.e. mis en dépression.

Les épaisseurs de parois évoquées ci-dessus permettent de supporter tant la pression induite par le vide que la pression du remblai.

Afin de protéger la cuve cylindrique et accessoirement le couvercle contre les agressions environnementales provenant du sol, du ruissellement et des précipitations, il est également prévu optionnellement de revêtir le côté extérieur **76** de l'enceinte de confinement avec un revêtement de protection. Dans un exemple de réalisation, on utilise le même revêtement pour l'étanchéité à l'air côté intérieur et pour la protection aux agressions physico-chimiques à l'extérieur. Ainsi un seul composé d'enduit, appliqué par exemple au pistolet, permet de traiter l'étanchéité à l'air et la protection contre la corrosion.

Pour fabriquer la cuve cylindrique **20,** on utilise préférentiellement du béton fibré qui confère des caractéristiques mécaniques très avantageuses à bon rapport prestation/prix. Avantageusement la cuve cylindrique est dépourvue d'armature métallique de renfort; il ne s'agit pas donc de béton armé classique mais de béton fibré à caractéristiques mécaniques optimales.

On peut également utiliser du béton fibré pour fabriquer le couvercle **22** en béton.

### Palier supérieur

Sur la figure 2, un exemple simple de palier supérieur est représenté. Une douille de palier **30** présente un manchon cylindrique logé au milieu de l'orifice axial **25** du couvercle en béton. La douille de palier 30 reçoit radialement à l'intérieur un premier roulement de tête **71** et un deuxième roulement de tête **73.**

La douille de palier comporte une collerette discoïde **33** s'étendant à partir de la zone supérieure du manchon cylindrique vers l'extérieur. Son diamètre est supérieur au diamètre **D25** de l'orifice axial du couvercle. La collerette discoïde repose généralement sur la surface supérieure du couvercle.

Dans l'exemple illustré, plus précisément, il est prévu un joint caoutchouc **5** interposé entre la collerette discoïde **33** de la douille de palier et une portée de réception **27** formée à l'embouchure de l'orifice axial **25.**

De plus, le joint caoutchouc fournit une fonction de support élastique. Plus généralement un joint élastomère convient pour former le joint souhaité.

Le joint caoutchouc **5** présente un coefficient d'amortissement conséquent, par exemple 10 %. On choisit de préférence des nuances dans la gamme des caoutchoucs synthétiques, comme par exemple à base de néoprène ou à base de nitrile.

On remarque que la face supérieure **57** et la face inférieure **53** du joint caoutchouc **5** ne sont pas planes, elles suivent une portion sensiblement de forme sphérique avec un rayon de courbure **R3** substantiel et un centre basé sur l'axe **A** au-dessus du palier supérieur.

Moyennant cette disposition géométrique, le joint caoutchouc forme un joint rotule qui permet de compenser un petit désalignement possible de la portée du palier.

Par ailleurs, avantageusement, le joint caoutchouc **5** du palier supérieur contribue à la fonction d'étanchéité à l'air.

Pour finir, sur l'exemple de la figure 2, il est prévu un capuchon d'étanchéité **56.** Ce capuchon vient accoster sur la collerette discoïde **33** avec un jointage d'étanchéité non représenté aux figures.

Cet agencement permet de garantir une étanchéité à l'air au niveau du palier supérieur depuis la portée de l'orifice dans le béton jusqu'au capuchon en passant par le joint caoutchouc et la collerette discoïde de la douille de palier **30.**

Selon une solution alternative, pour l'étanchéité au vide au niveau du palier supérieur, on peut utiliser une cloche **87** représentée en trait mixte à la figure 2.

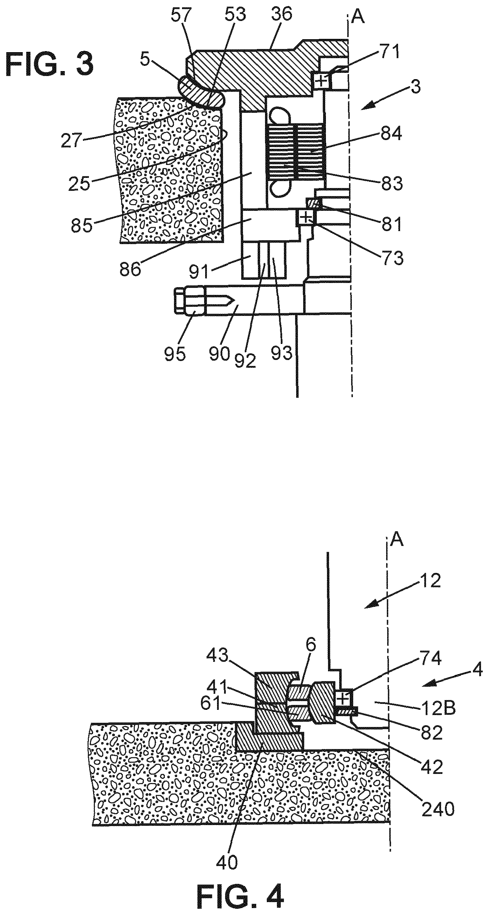

Sur la figure 3, la douille de palier est une pièce multifonction formée en trois parties (36, 85, 86) assemblées entre elles, le moteur générateur se trouvant radialement à l'intérieur de la portion intermédiaire **85** de cette douille de palier.

La portion intermédiaire logeant le moteur est interposée entre la partie supérieure **36** formant appui sur le joint caoutchouc **5** et la partie inférieure **86** portant le second roulement de tête **73** et un dispositif d'attraction magnétique.

La partie supérieure **36** loge la bague externe du premier roulement de tête **71,** ainsi qu'une zone annulaire d'appui **57.** La partie supérieure **36** est de révolution autour de l'axe **A.** Les appuis inférieur **53** et supérieur **57** du joint épouse respectivement la portée **27** et le dessous de la pièce supérieure **36.**

La portion intermédiaire **85** est généralement de révolution autour de l'axe **A** et peut contenir des éléments de fixation du stator du moteur.

Sur le palier supérieur **3,** il est prévu un circlip **81** pour maintenir axialement le roulement de tête.

On remarque ici que la collerette qui appuie sur le joint caoutchouc forme également un disque de fermeture correspondant au capuchon de la configuration précédente.

### Palier inférieur

Un flasque de calage **40** est logé dans la zone en creux centrale **240.** Sur ce flasque de calage **40** on dispose une rondelle inférieure **41.** Dans la zone radialement intérieure de la rondelle inférieure, on dispose un joint en fil métallique tricoté inférieur **61.**

Ensuite on installe l'anneau **42** solidaire de la bague extérieure du roulement de pied **74.**

Au-dessus de la rondelle inférieure **41,** on dispose une rondelle supérieure **43.** Dans la zone radialement intérieure de la rondelle supérieure, on dispose un autre joint en fil métallique tricoté supérieur **6.**

Par ailleurs, il est prévu sous le roulement de pied **74** un circlip de butée **82** selon une disposition connue en soi.

Le ou les joint(s) en fil métallique tricoté **6,61** présente(nt) un bon coefficient de conduction thermique et peut donc évacuer des calories éventuellement créées dans la partie tournante vers le flasque de calage et vers le fond de l'enveloppe en béton.

Bien entendu, il est possible d'utiliser un seul joint en fil métallique tricoté.

### Installation

Le dispositif proposé ici est installé essentiellement dans une cavité de sol.

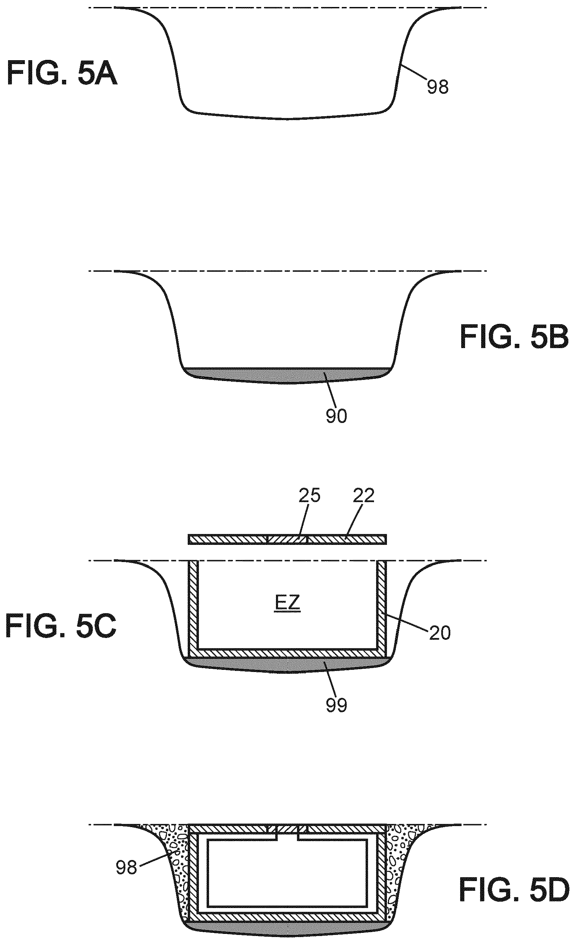

Pour réaliser l'installation proposée, on creuse un trou **98** dans le sol, au moins aussi grand que la cuve cylindrique de l'enceinte de confinement, comme ceci est illustré la figure 5A. On coule ensuite une chape de fondement **99** comme illustré la figure 5B. Cette chape peut être coulée avec du béton autolissant pour faciliter l'opération de mise à niveau. Cette chape peut être sommaire, non armée.

Ensuite on descend la cuve cylindrique **20** comme illustré sur la figure 5C. On installe le palier inférieur **4** et volant d'inertie 1. On installe ensuite le couvercle **22.** Puis on installe les éléments du palier supérieur **3.**

On comble les zones excavées excédentaires par des matériaux de remblai **98** comme illustré la figure 5D.

Les matériaux de remblai peuvent être choisis avec un taux de vide conséquent de manière à pouvoir absorber une projection d'éclat éventuelle qui traverserait la cuve cylindrique.

Il faut noter qu'en lieu d'une chape de fondement, la cuve cylindrique pourrait reposer sur des cales larges dans un lit de sable ou un radier de mortier. Tout autre solution de maintien en position à plat pourrait également convenir.

Selon une solution alternative d'installation, si le dispositif de stockage d'énergie **100** ne peut pas être installé dans le sol, on peut disposer tout autour du dispositif des sacs emplis de sable.

### Autres fonctions

Comme connu en soi dans le domaine des systèmes à base de volant d'inertie, il est prévu un moteur-générateur **8** pour injecter de l'énergie cinétique dans le volant d'inertie ou pour récupérer de l'énergie sous forme cinétique et la restituer sous forme électrique.

Le rotor **84** est relié solidairement à l'arbre **12,** tandis que le stator **83** est relié solidairement à la portion intermédiaire **85** de la douille multifonction de palier. Il s'agit d'un moteur sans balais, à aimants permanents, connu en soi.

Selon une variante de réalisation, le moteur-générateur peut être refroidi par un circuit de liquide.

Comme connu en soi dans le domaine des systèmes à base de volant d'inertie, il peut être prévu une fonction de sustentation magnétique.

Comme illustré sur la figure 3, l'agencement comprend deux anneaux métalliques **91 93** séparés par un anneau en matériau à aimant permanent **92** pour créer un champ magnétique interagissant avec le disque **90** et ainsi créer un effet de force de levage.

Tout autre solution de sustentation magnétique par traction vers le haut sans contact peut bien entendu convenir.

De plus, dans une solution alternative, la sustentation magnétique peut être agencé au niveau du palier inférieure avec un agencement de poussée vers le haut.

En outre, il peut être prévu un équilibrage. Une ou plusieurs masselottes **95** peuvent être fixés radialement à l'extérieur d'un disque ici dans l'exemple illustré le disque de sustentation magnétique.

Il faut noter s'agissant de la fonction roulement, qu'on peut utiliser dans le montage deux roulements ou plus de trois roulements, les roulements pouvant être typiquement des roulements à billes ou à rouleaux.

S'agissant des facteurs de forme, en référence à la figure 7, **D2** étant le diamètre extérieur de la cuve **20** et **D25** le diamètre intérieur de l'orifice axial 25 du couvercle, on peut choisir le ratio D25/D2 entre 0,1 et 0,4.

A propos de la hauteur **H1** du volant, on peut choisir **H1/D2** compris entre 0,5 et 2.

## Revendications

1. Dispositif de stockage d'énergie (100) à base de volant d'inertie comprenant :
- une enceinte de confinement (2), définissant un espace intérieur dans lequel une dépression peut être créée,
- un volant d'inertie (1) contenu dans l'enceinte de confinement et monté à rotation par rapport à l'enceinte de confinement, le volant d'inertie comprenant un arbre métallique (12) et un corps (11) à moment d'inertie,
- un palier supérieur (3) faisant office au moins de joint d'articulation à rotation entre une portée supérieure de l'enceinte et l'arbre,
- un palier inférieur (4) faisant office au moins de joint d'articulation à rotation entre une portée inférieure de l'enceinte et l'arbre,
**caractérisé en ce que** l'enceinte de confinement (2) est réalisée en béton, **en ce que** le palier supérieur (3) fournit une fonction de support élastique pour supporter élastiquement une zone d'extrémité supérieure de l'arbre métallique (12) par rapport la portée supérieure de l'enceinte, et **en ce que** le palier inférieur (4) fournit une fonction de support élastique pour supporter élastiquement une zone d'extrémité inférieure de l'arbre métallique par rapport la portée inférieure de l'enceinte.

2. Dispositif selon la revendication 1, dans lequel le palier supérieur (3) fournit une fonction d'étanchéité à l'air.

3. Dispositif selon l'une des revendications 1 à 2, dans lequel la fonction de support élastique du palier supérieur (3) comprend en outre une fonction d'amortissement et la fonction de support élastique du palier inférieur (4) comprend en outre une fonction d'amortissement.

4. Dispositif selon l'une des revendications 1 à 3, dans lequel l'enceinte de confinement comprend d'une part une cuve cylindrique (20), et d'autre part un couvercle (22) percé d'un orifice axial.

5. Dispositif selon l'une des revendications 1 à 4, dans lequel l'enceinte de confinement est revêtue, au moins du côté intérieur, d'un revêtement (75,76) étanche à l'air, ledit revêtement étant par exemple une résine chargée de flocons de verre.

6. Dispositif selon l'une des revendications 1 à 5, dans lequel le palier supérieur (3) et/ou le palier inférieur (4) font office de joint rotule.

7. Dispositif selon l'une des revendications 1 à 6, dans lequel le palier supérieur (3) comprend un joint (5) en élastomère portant sur la portée supérieure de l'enceinte, en particulier sur le couvercle.

8. Dispositif selon l'une des revendications 1 à 7, dans lequel le palier inférieur (4) comprend un anneau en fil métallique tricoté (6;61) interposé entre la zone d'extrémité inférieure de l'arbre métallique et la portée inférieure de l'enceinte.

9. Dispositif selon l'une des revendications 1 à 8, dans lequel la cuve cylindrique (20) est dépourvue d'armature de renfort, la cuve cylindrique (20) étant formée essentiellement par du béton fibré.

10. Dispositif selon l'une des revendications 1 à 9, dans lequel il est prévu une fonction de sustentation magnétique, de préférence passive, et/ou le dispositif comprend en outre un moteur-générateur pour injecter et/ou récupérer de l'énergie cinétique, le moteur-générateur étant agencé sur l'arbre dans l'espace intérieur.

11. Installation de stockage et restitution d'énergie comprenant un dispositif selon l'une des revendications 1 à 9, **caractérisé en ce que** ledit dispositif est installé essentiellement dans une cavité de sol (98).

## Patentansprüche

1. Energiespeichervorrichtung (100) auf Schwungradbasis, umfassend:
- ein Gehäuse (2), das einen Innenraum begrenzt, in dem ein Unterdruck erzeugt werden kann,
- ein Schwungrad (1), das in dem Gehäuse enthalten und drehbar in Bezug auf das Gehäuse gelagert ist, wobei das Schwungrad eine Metallwelle (12) und einen Körper (11) mit einem Trägheitsmoment umfasst,
- ein oberes Lager (3), das wenigstens als Drehgelenk zwischen einer oberen Auflagefläche des Gehäuses und der Welle dient,
- ein unteres Lager (4), das wenigstens als Drehgelenk zwischen einer unteren Auflagefläche des Gehäuses und der Welle dient,
**dadurch gekennzeichnet, dass** das Gehäuse (2) aus Beton besteht, dass das obere Lager (3) eine elastische Stützfunktion zum elastischen Abstützen eines oberen Endbereichs der Metallwelle (12) gegenüber der oberen Auflagefläche des Gehäuses erfüllt, und dass das untere Lager (4) eine elastische Stützfunktion zum elastischen Abstützen eines unteren Endbereichs der Metallwelle gegenüber der unteren Auflagefläche des Gehäuses bereitstellt.

2. Vorrichtung nach Anspruch 1, wobei das obere Lager (3) eine Luftdichtungsfunktion bereitstellt.

3. Vorrichtung nach einem der Ansprüche 1 bis 2, wobei die elastische Stützfunktion des oberen Lagers (3) zusätzlich eine Dämpfungsfunktion umfasst und die elastische Stützfunktion des unteren Lagers (4) zusätzlich eine Dämpfungsfunktion umfasst.

4. Vorrichtung nach einem der Ansprüche 1 bis 3, wobei das Gehäuse einerseits einen zylindrischen Behälter (20) und andererseits einen Deckel (22) mit einer axialen Öffnung umfasst.

5. Vorrichtung nach einem der Ansprüche 1 bis 4, wobei das Gehäuse wenigstens auf der Innenseite mit einer luftdichten Beschichtung (75, 76) versehen ist, wobei die Beschichtung beispielsweise ein mit Glasflocken gefülltes Harz ist.

6. Vorrichtung nach einem der Ansprüche 1 bis 5, wobei das obere Lager (3) und/oder das untere Lager (4) als Kugelgelenk dienen.

7. Vorrichtung nach einem der Ansprüche 1 bis 6, wobei das obere Lager (3) eine Elastomerdichtung (5) aufweist, die auf der oberen Auflagefläche des Gehäuses, insbesondere auf dem Deckel, aufliegt.

8. Vorrichtung nach einem der Ansprüche 1 bis 7, wobei die untere Lagerung (4) einen zwischen dem unteren Endbereich der Metallwelle und der unteren Auflagefläche des Gehäuses angeordneten Ring aus gestricktem Metalldraht (6; 61) umfasst.

9. Vorrichtung nach einem der Ansprüche 1 bis 8, wobei der zylindrische Behälter (20) keine Verstärkungsarmierung aufweist, wobei der zylindrische Behälter (20) im Wesentlichen aus Faserbeton gebildet ist.

10. Vorrichtung nach einem der Ansprüche 1 bis 9, wobei eine vorzugsweise passive magnetische Abhebefunktion vorgesehen ist und/oder die Vorrichtung zusätzlich einen Motor-Generator zum Einspeisen und/oder Rückgewinnen von kinetischer Energie umfasst, wobei der Motor-Generator an der Welle im Innenraum angeordnet ist.

11. Anlage zur Speicherung und Rückgewinnung von Energie mit einer Vorrichtung nach einem der Ansprüche 1 bis 9, **dadurch gekennzeichnet, dass** die Vorrichtung im Wesentlichen in einem Bodenhohlraum (98) installiert ist.

## Claims

1. Energy storage device (100) based on a flywheel, comprising:
- a containment enclosure (2), defining an interior space in which a negative pressure can be created,
- a flywheel (1) contained in the containment enclosure and mounted to rotate relative to the containment enclosure, the flywheel comprising a metal shaft (12) and a body (11) having a moment of inertia,
- an upper bearing (3) acting at least as a hinge joint for rotation between an upper bearing surface of the enclosure and the shaft,
- a lower bearing (4) acting at least as a hinge joint for rotation between a lower bearing surface of the enclosure and the shaft,
**characterized in that** the containment enclosure (2) is made of concrete, **in that** the upper bearing (3) provides an elastic support function so as to elastically support an upper end region of the metal shaft (12) relative to the upper bearing surface of the enclosure, and **in that** the lower bearing (4) provides an elastic support function so as to elastically support a lower end region of the metal shaft relative to the lower bearing surface of the enclosure.

2. Device according to claim 1, wherein the upper bearing (3) provides an airtight sealing function.

3. Device according to one of claims 1 to 2, wherein the elastic support function of the upper bearing (3) further comprises a damping function and the elastic support function of the lower bearing (4) further comprises a damping function.

4. Device according to one of claims 1 to 3, wherein the containment enclosure comprises a cylindrical tank (20) on the one hand, and on the other hand a cover (22) pierced with an axial orifice.

5. Device according to one of claims 1 to 4 wherein the containment enclosure is coated, at least on the interior side, with an airtight coating (75,76), said coating being for example a resin reinforced with glass flakes.

6. Device according to one of claims 1 to 5, wherein the upper bearing (3) and/or the lower bearing (4) acts as a ball joint.

7. Device according to one of claims 1 to 6, wherein the upper bearing (3) comprises an elastomer seal (5) which rests on the upper bearing surface of the enclosure, in particular on the cover.

8. Device according to one of claims 1 to 7, wherein the lower bearing (4) comprises a ring of knitted metal wire (6; 61) interposed between the lower end region of the metal shaft and the lower bearing surface of the enclosure.

9. Device according to one of claims 1 to 8, wherein the cylindrical tank (20) is without any reinforcing frame, the cylindrical tank (20) being formed essentially by fiber-reinforced concrete.

10. Device according to one of claims 1 to 9, wherein a magnetic levitation function is provided, preferably passive, and/or the device further comprises a motor-generator for injecting and/or recovering energy kinetic, the motor-generator being arranged on the shaft, within the interior space.

11. Energy storage and release installation comprising a device according to one of claims 1 to 9, **characterized in that** said device is installed essentially in a cavity in the ground (98).
